# EUROPEAN PATENT SPECIFICATION

(11) **EP 3 260 409 B1**
(45) Date of publication and mention of the grant of the patent: **09.10.2024**
(21) Application number: 17177023.3
(22) Date of filing: 21.06.2017
(51) Int. Cl.: B66C 23/18, B66C 23/20, B66C 23/32, E04H 12/34, F03D 13/10

(54) **METHOD OF ASSEMBLING A WIND TURBINE**
VERFAHREN ZUR MONTAGE EINER WINDTURBINE
PROCÉDÉ D'ASSEMBLAGE D'UNE ÉOLIENNE

(30) Priority: 21.06.2016 US 201615188610
(43) Date of publication of application: 27.12.2017
(73) Proprietor: Davis, Daniel E., San Benito, Texas 78586 (US)
(72) Inventor: Davis, Daniel E., San Benito, Texas 78586 (US)
(74) Representative: EP&C

(56) References cited:
- WO-A1-2016/007241
- DE-A1- 102009 000 963
- US-A- 3 789 565
- US-A1- 2010 101 086
- US-A1- 2013 223 964
- US-A1- 2015 300 037

## Description

### CROSS-REFERENCE TO RELATED APPLICATIONS

This application claims priority from US-application 15/188,610, filed on 21 June 2016.

### BACKGROUND OF THE DISCLOSURE

### Field of the Disclosure

Embodiments of the present disclosure generally relate to a wind turbine.

### Description of the Related Art

A wind turbine includes a rotor having a hub and multiple (typically three) blades connected to the hub. The rotor is connected to an input drive shaft of a gearbox. The blades transform wind energy into torque that drives a generator connected to an output shaft of the gearbox. The gearbox steps up the inherently low rotational speed of the rotor for the generator to efficiently convert the rotational mechanical energy to electricity, which is fed into a utility grid. Gearless direct drive wind turbines also exist. The drive shafts, generator, gearbox and other components are typically mounted within a nacelle that is positioned on top of a tower that may be a truss or tubular.

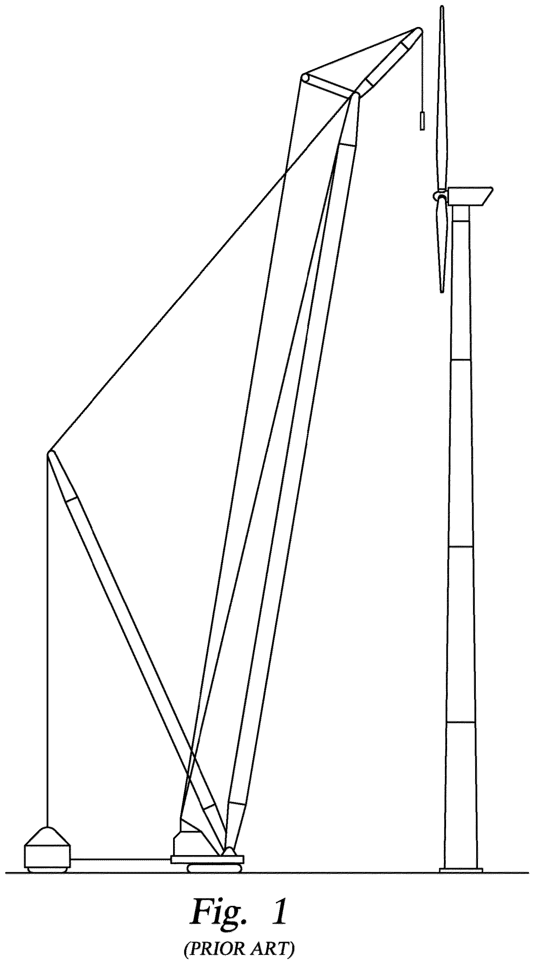

Figure 1 illustrates a prior art lattice boom crawler crane having just assembled a wind turbine. To assemble the wind turbine, a high capacity lattice boom crane is required to hoist the nacelle on to the tower and then to hoist the rotor on to the nacelle. Since the wind turbines are usually located in remote locations, costs of deploying the crane to the wind turbine site can become substantial. Further, to increase capacity and efficiency, larger towers, longer blades, and heavier nacelles are currently in development, further exacerbating the installation cost (and maintenance cost if the nacelle must be removed) up to the point that it may be cost prohibitive to install the larger wind turbines, especially if the height capacity of the conventional lattice boom crane is exceeded.

US2015/300037A1 (hereinafter D1) discloses a method and device for the installation of a wind turbine. The assembly comprises a structural tower having an elongated tower frame with a longitudinally-extending rail member and a translatable crane assembly which is slidably engageable with the longitudinally-extending rail member. The structural tower consists of a plurality of tower sections. The tower sections are placed on top of each other by the crane assembly. In one embodiment of D1, shown in figures 10- 12, the nacelle is lifted by the crane assembly and installed on top of the upper tower section. Subsequently, as shown in figures 13 - 16, the blades are lifted by the crane assembly and attached to the nacelle. DE 10 2009 000963 A1 discloses a method of assembling a wind turbine comprising: placing a tower base in an upright position, the tower base comprising a tower base guide rail and a carriage, the carriage including an assembly rotatable around a horizontal axis between a loading position and an unloading position; connecting a tower body member to the assembly while the assembly is in the loading position; moving the carriage upwardly to a top of the tower base along the tower base guide rail while the assembly is in the loading position and rotating around a horizontal axis the assembly from the loading position to the unloading position such that the tower body member is positioned above the tower base.

### SUMMARY OF THE DISCLOSURE

Embodiments of the present disclosure generally relate to a wind turbine. In one embodiment, a method according to the independent method claim 1 is provided.

In another embodiment, a wind turbine according to the independent apparatus claim 9 is provided.

In yet another embodiment, a method according to the independent method claim 12 is also provided.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates a prior art lattice boom crawler crane having just assembled a wind turbine.

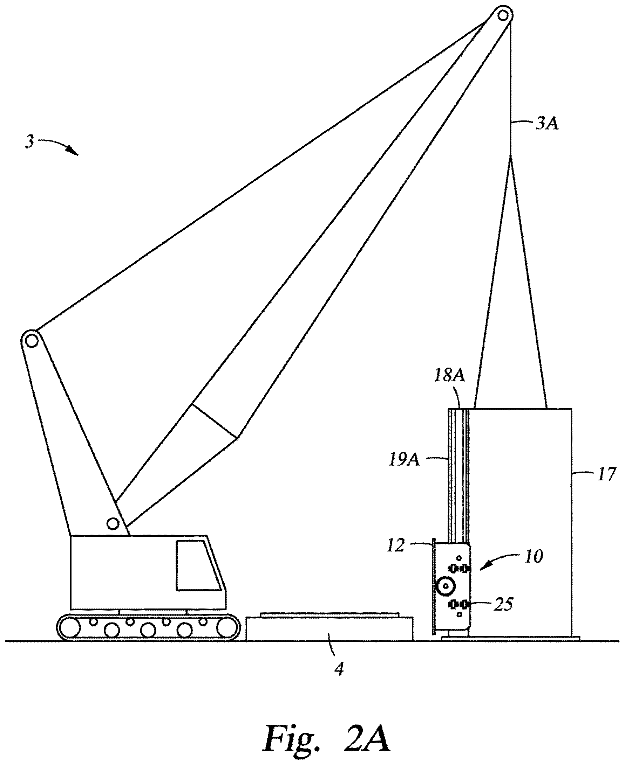

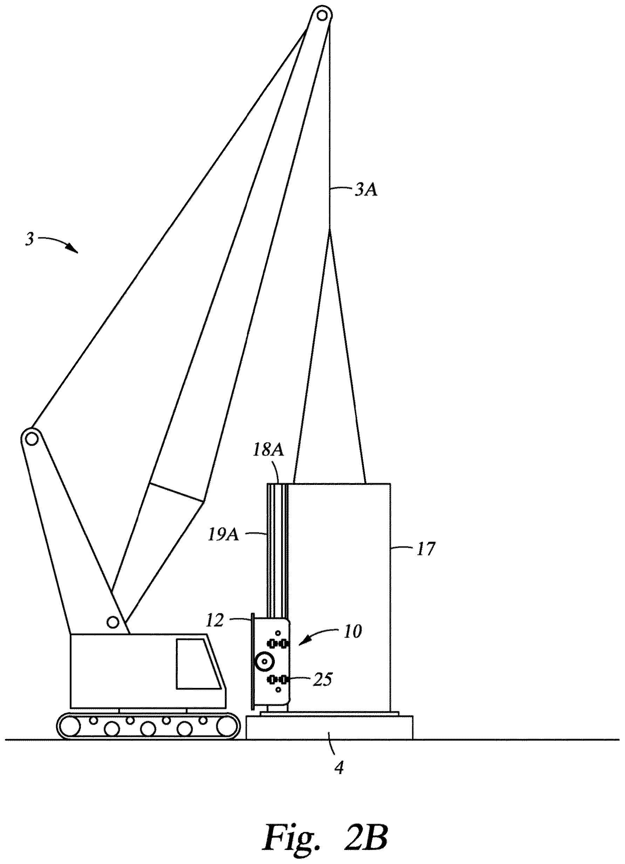

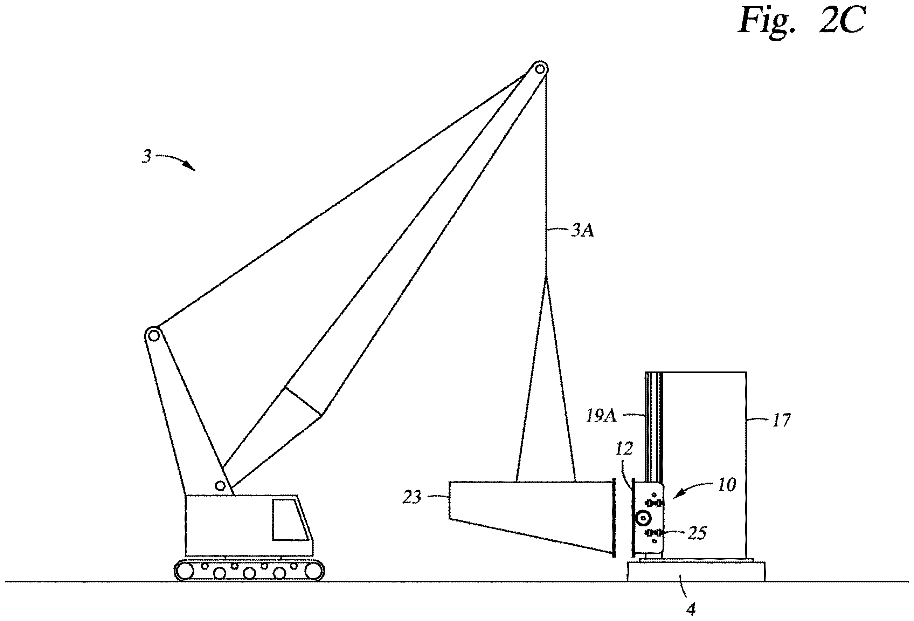

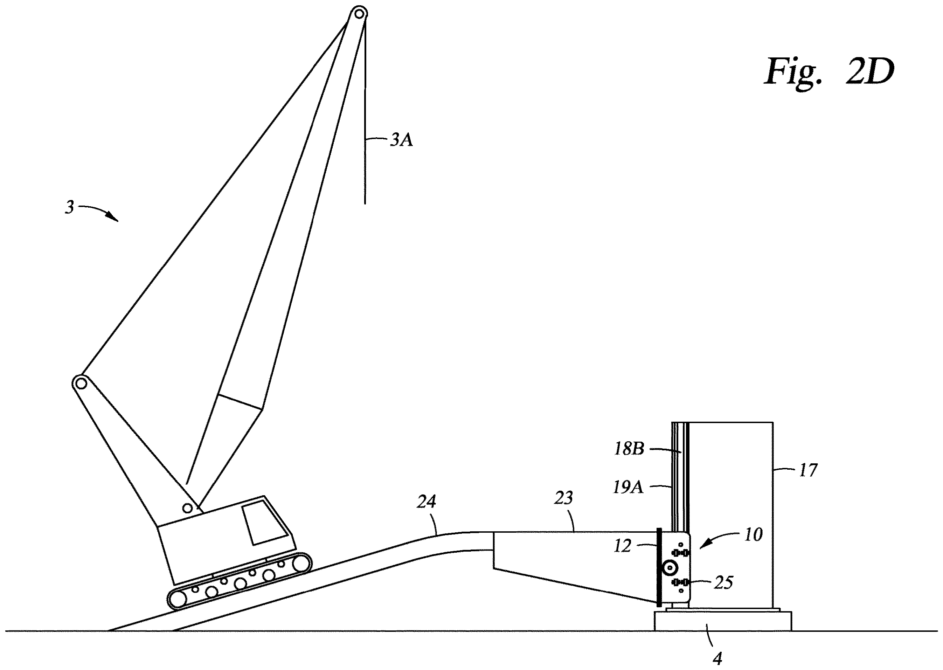

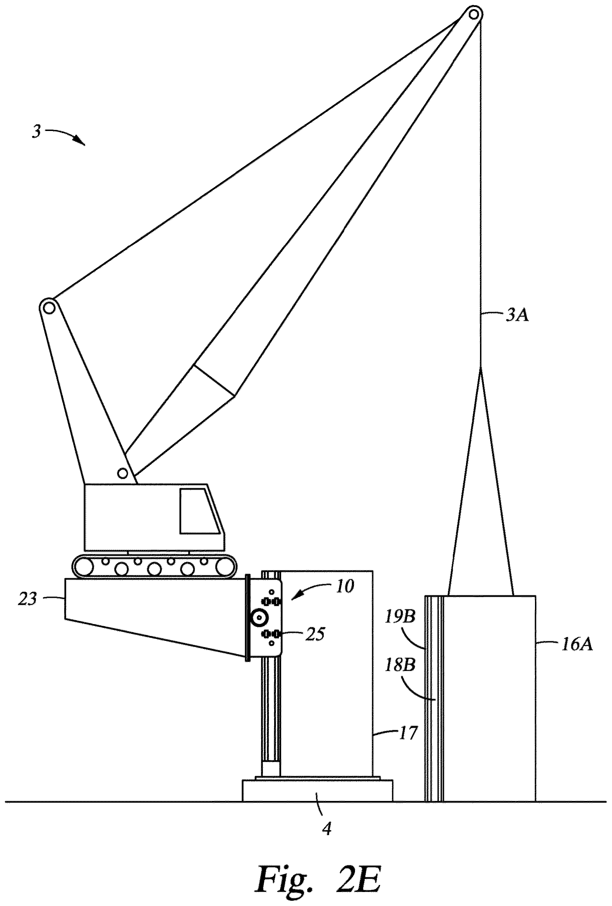

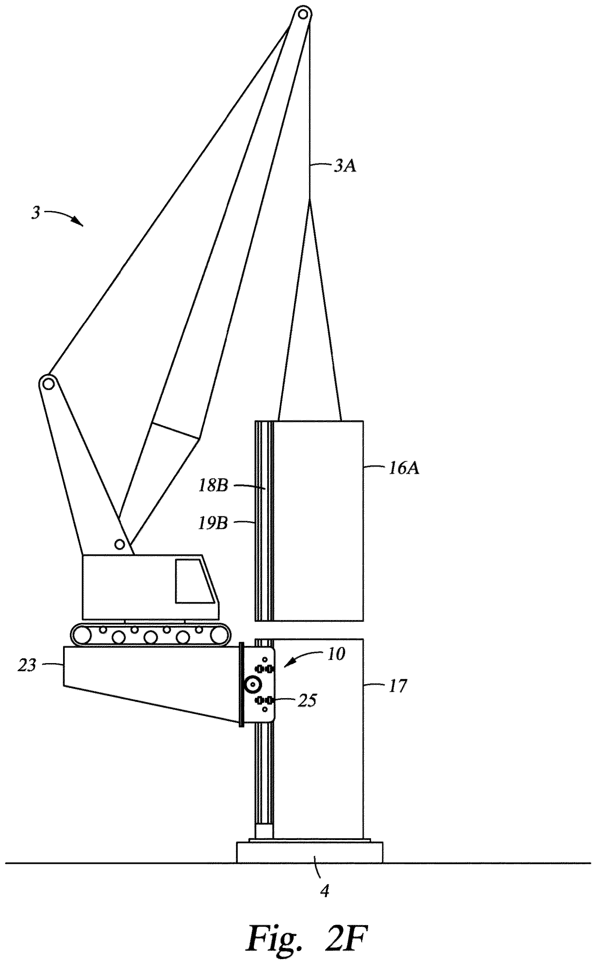

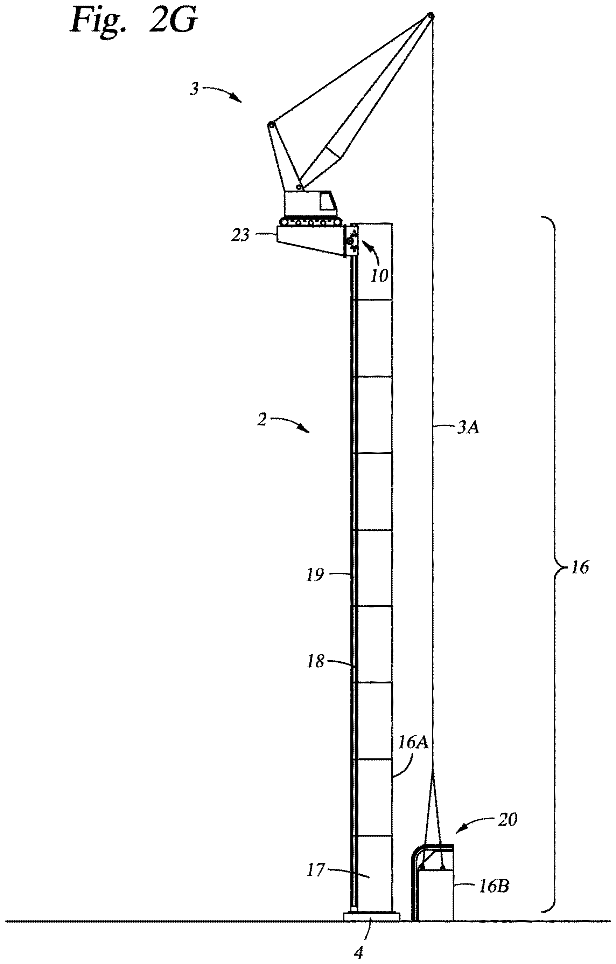

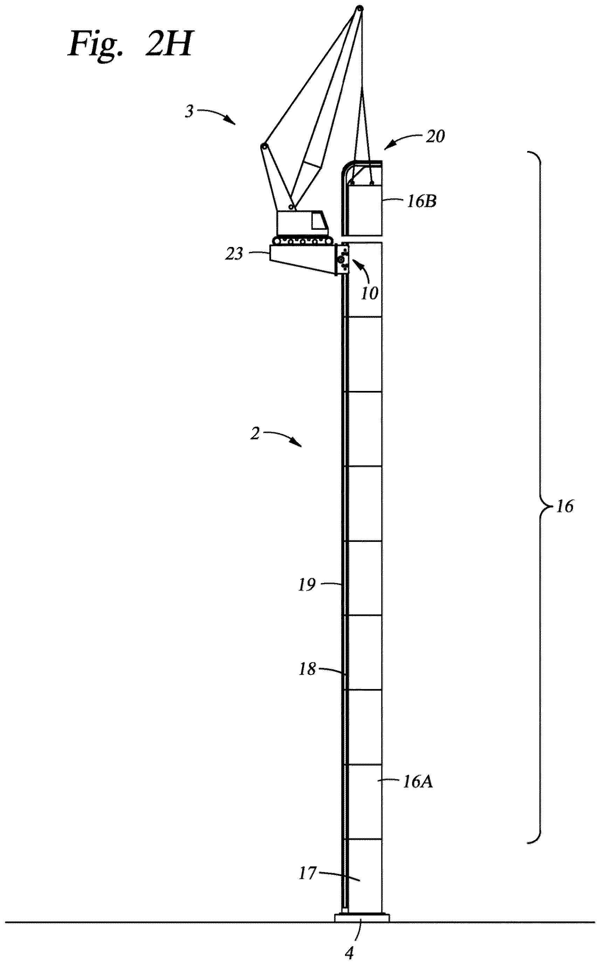

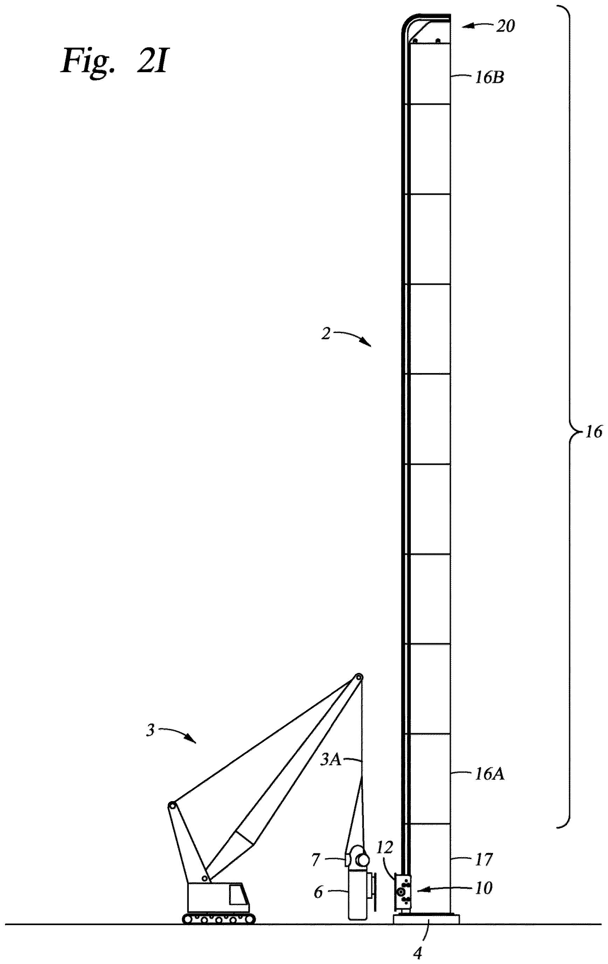

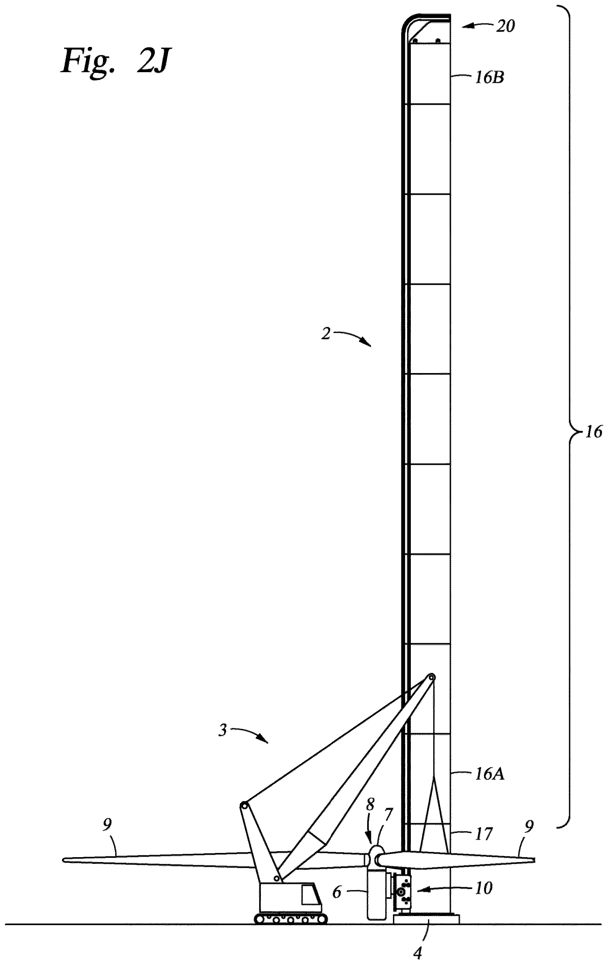

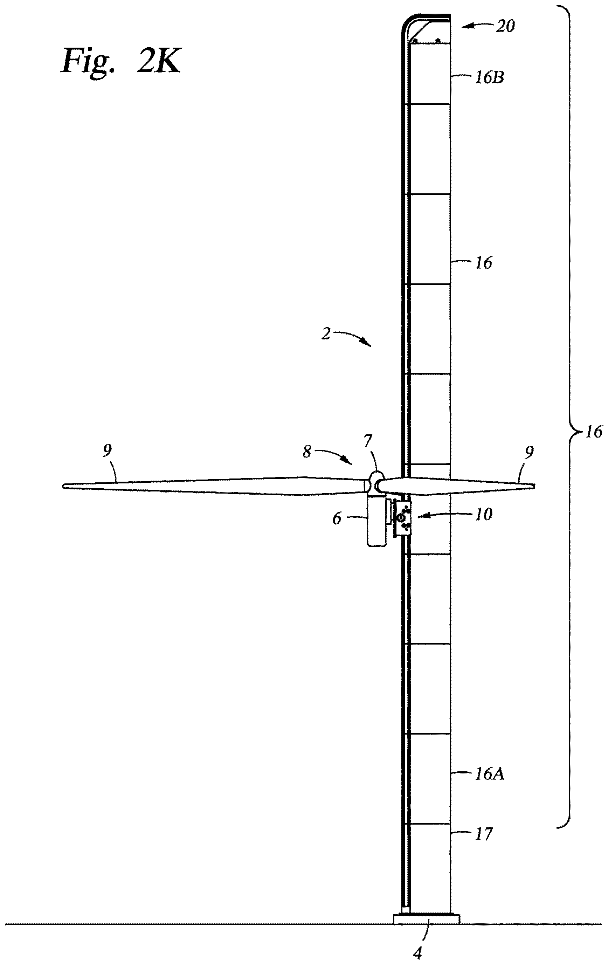

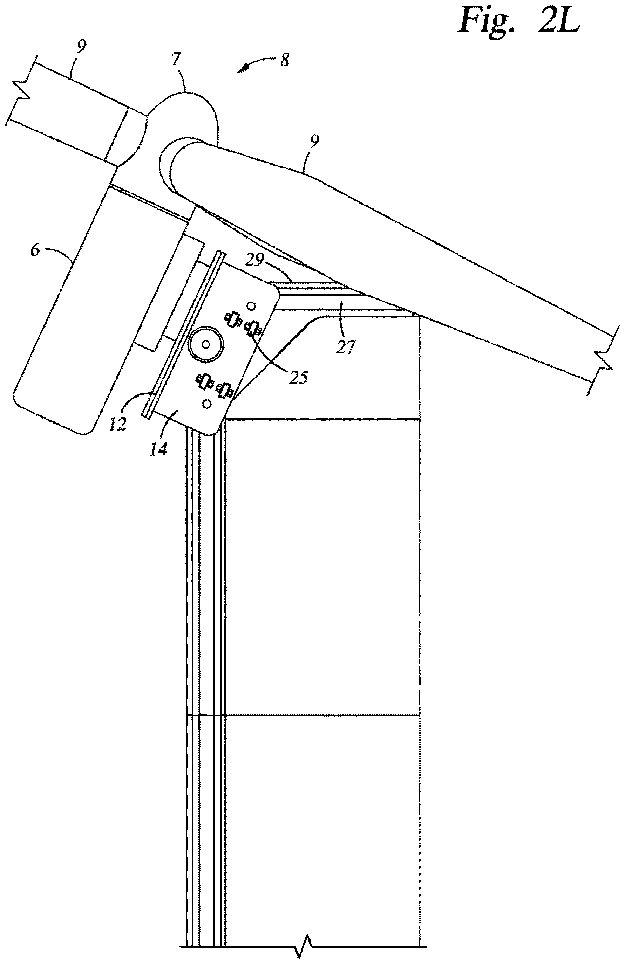

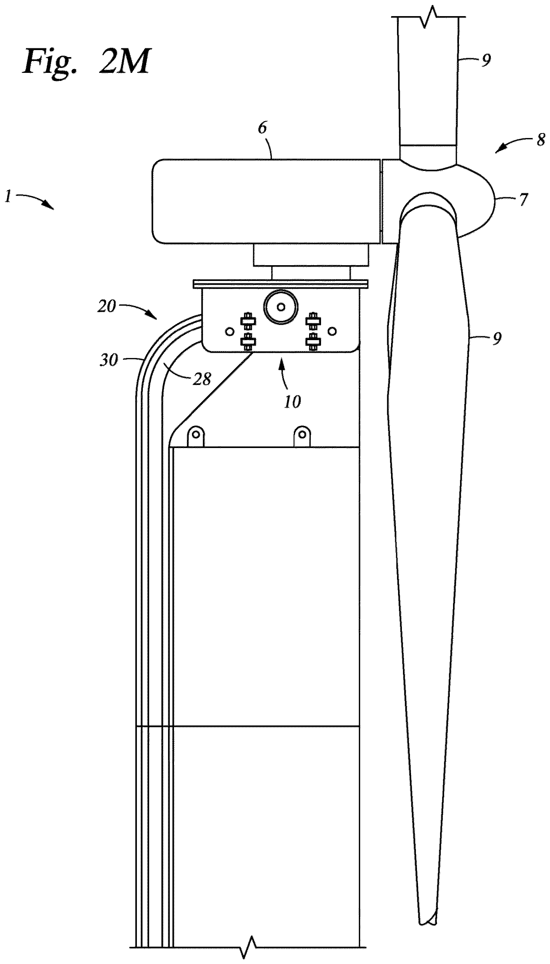

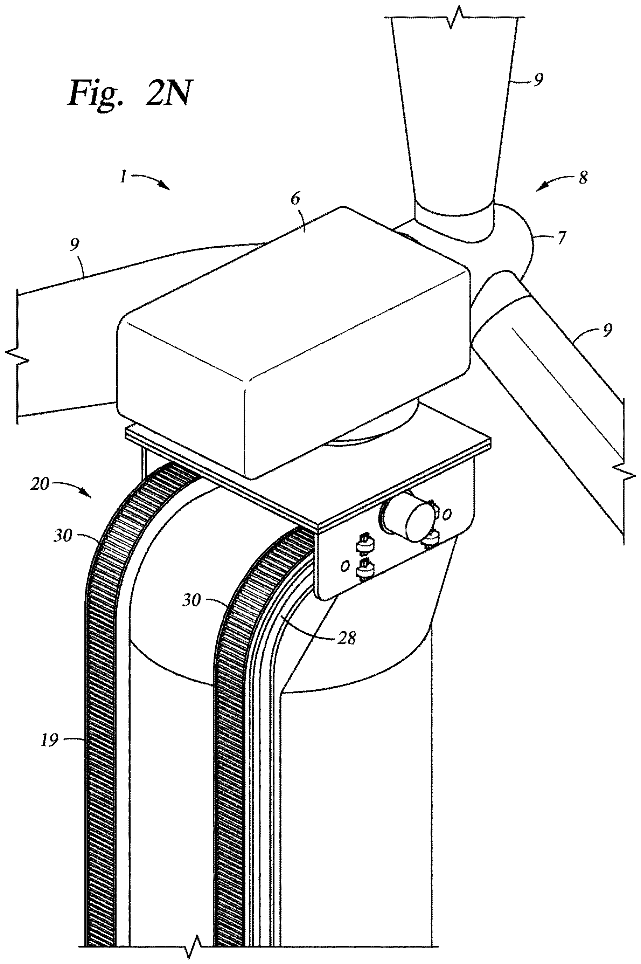

Figures 2A-2N illustrate one embodiment of assembling a wind turbine in accordance with the present disclosure. Figure 2A illustrates placing a tower base in an upright position, with a carriage connected to the tower base. Figure 2B illustrates placing the tower base on a pad. Figure 2C illustrates a crane platform connected to the carriage. Figure 2D illustrates positioning a crawler crane onto the crane platform using a ramp. Figure 2E illustrates a crane rope of the crawler crane connected to a first tower body member. Figure 2F illustrates connecting the first tower body member to the tower base to form a turbine tower. Figure 2G illustrates additional tower body members connected to the turbine tower, with the crane rope of the crawler crane connected to a top tower body member. Figure 2H illustrates connecting the top tower body member to the turbine tower. Figure 2I illustrates connecting a nacelle and hub to the carriage in a vertical position. Figure 2J illustrates connecting blades to the hub to form a rotor. Figure 2K illustrates the nacelle and rotor raising along a rail track. Figure 2L illustrates the nacelle and rotor pivoting from the vertical position to a horizontal position. Figures 2M and 2N illustrate the nacelle and rotor in the horizontal position and ready for operation.

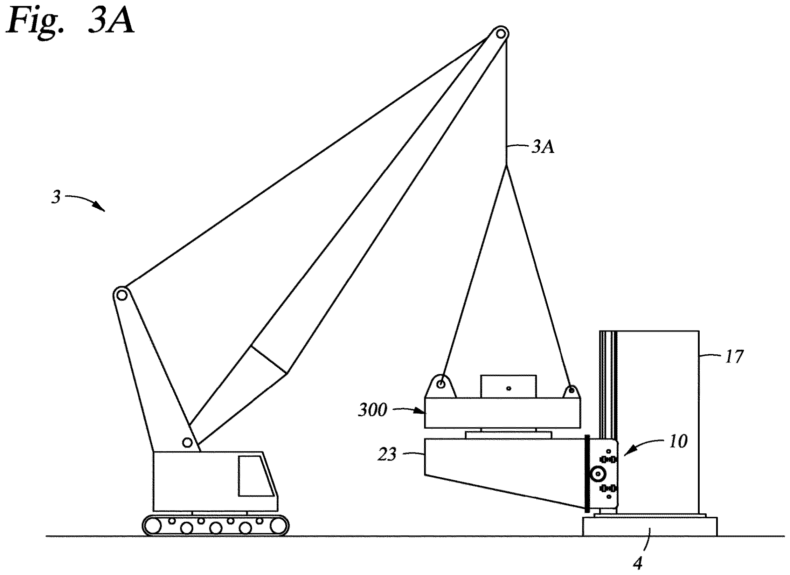

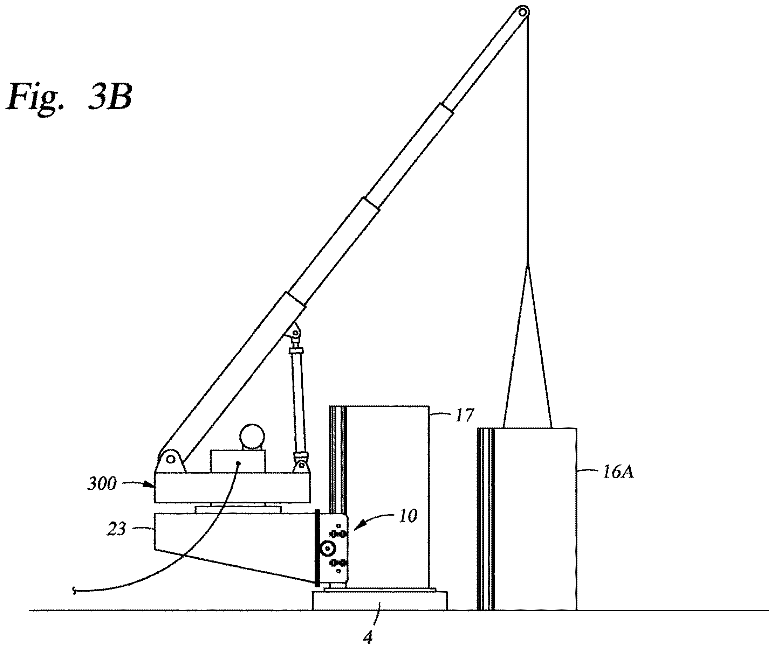

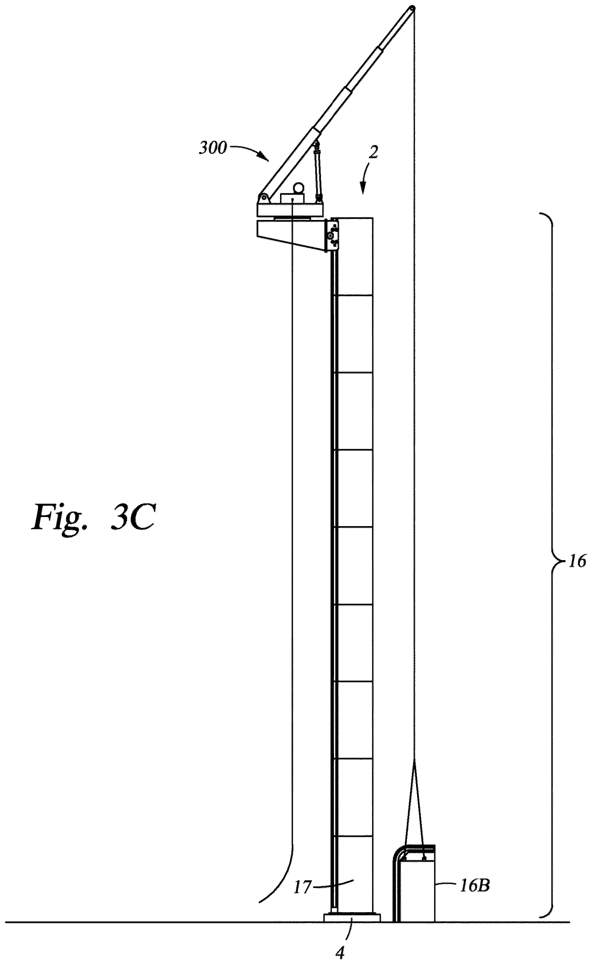

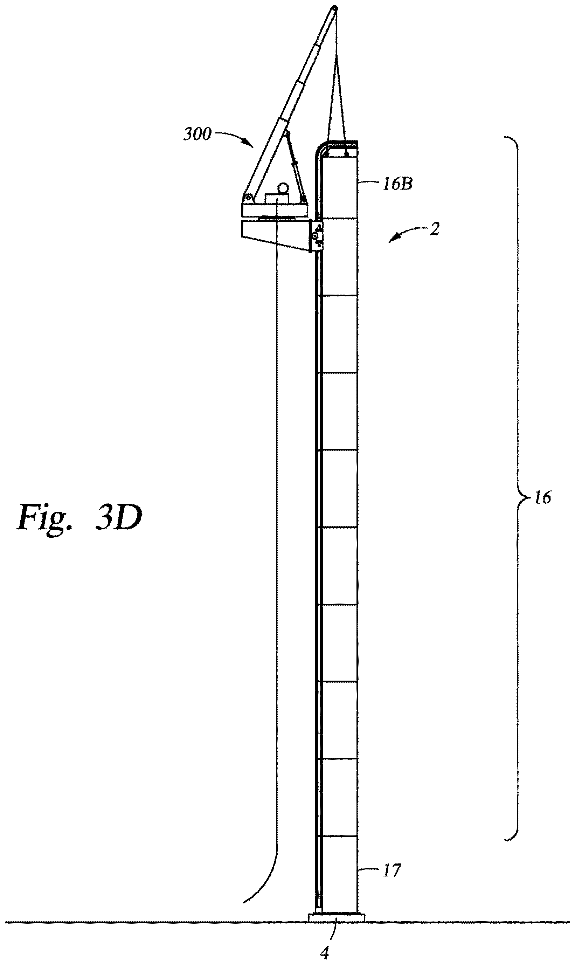

Figures 3A-3D illustrates another embodiment of assembling a wind turbine in accordance with the present disclosure. Figure 3A illustrates positioning a stiff leg crane onto the crane platform that is connected to the carriage. Figure 3B illustrates a crane rope of the stiff leg crane connected to the first tower body member. Figure 3C illustrates additional tower body members connected to the turbine tower, with the crane rope of the stiff leg crane connected to the top tower body member. Figure 3D illustrates connecting the top tower body member to the turbine tower.

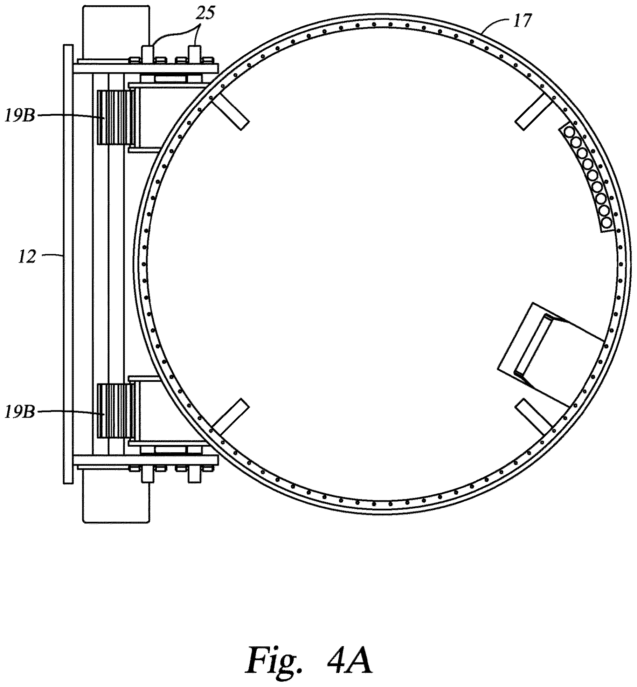

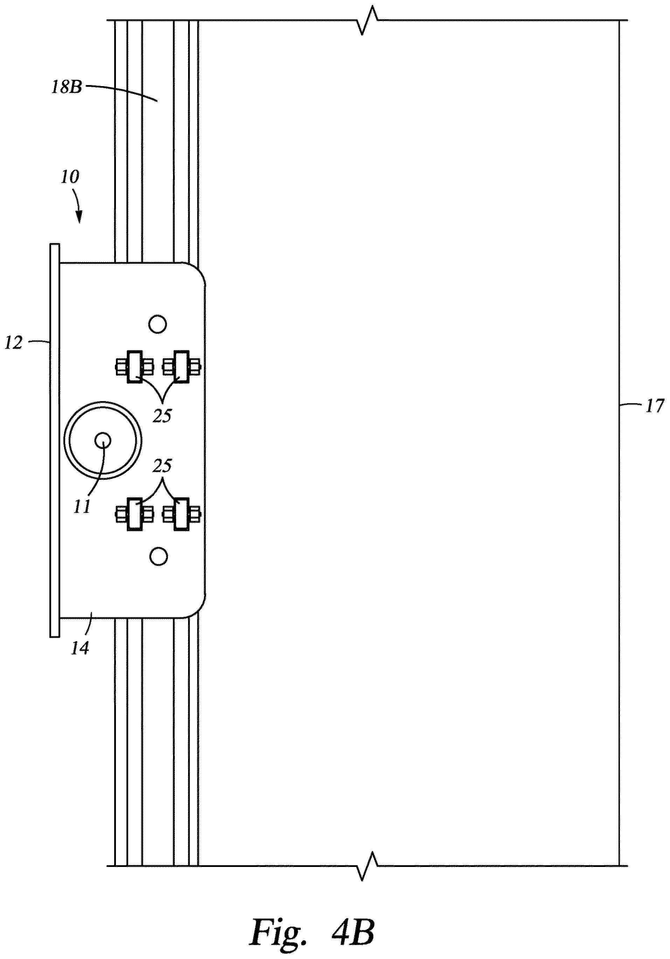

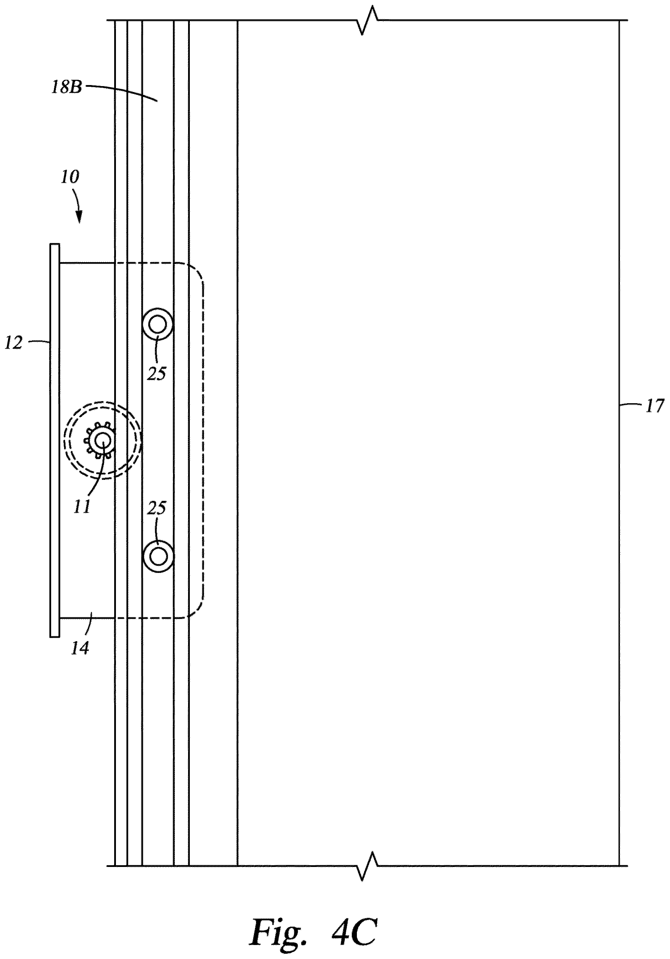

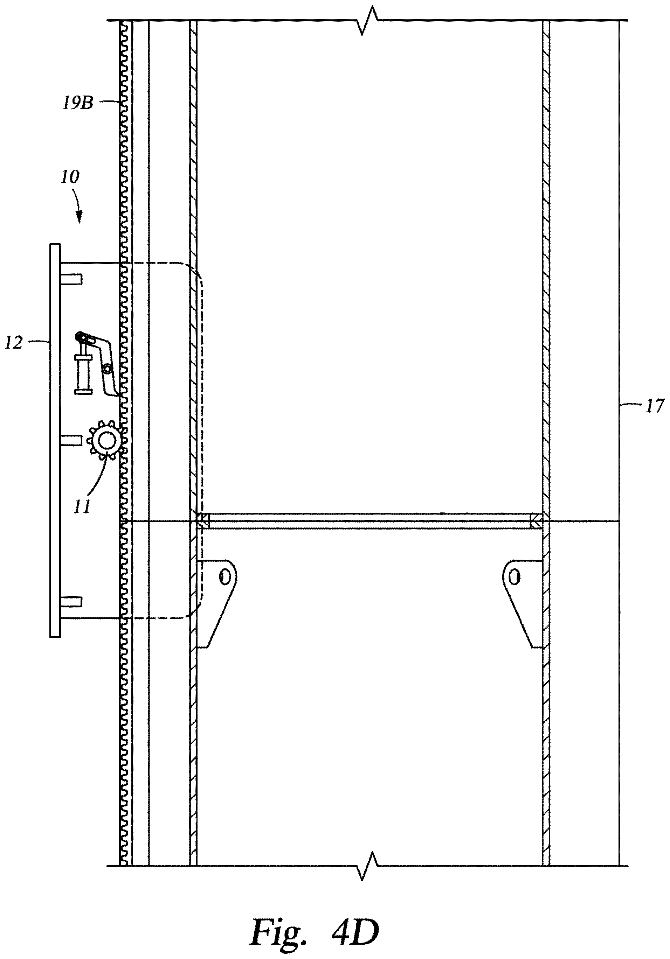

Figures 4A-4D illustrate an embodiment of the carriage in accordance with the present disclosure. Figure 4A illustrates a top view of the carriage connected to the tower base. Figure 4B illustrates a side view of the carriage connected to the tower base. Figure 4C illustrates the side view of the carriage connected to the tower base, with a portion of a body of the carriage broken away to show trolley wheels of the carriage engaging a guide rail of the tower base. Figure 4D illustrates the side view of the carriage connected to the tower base, with a further portion of the body of the carriage broken away to show a pinion gear of the carriage interlocking with a rack of the tower base.

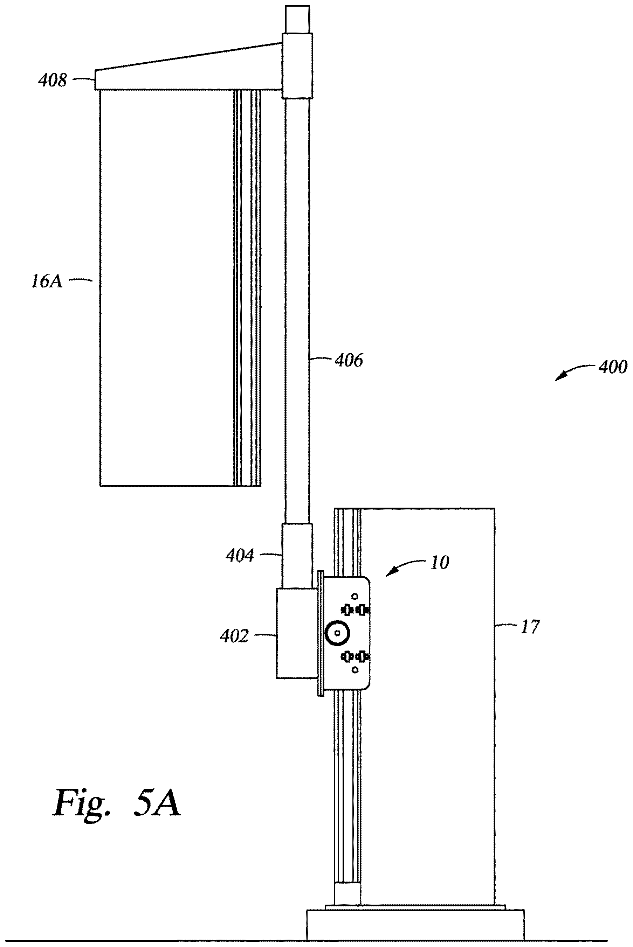

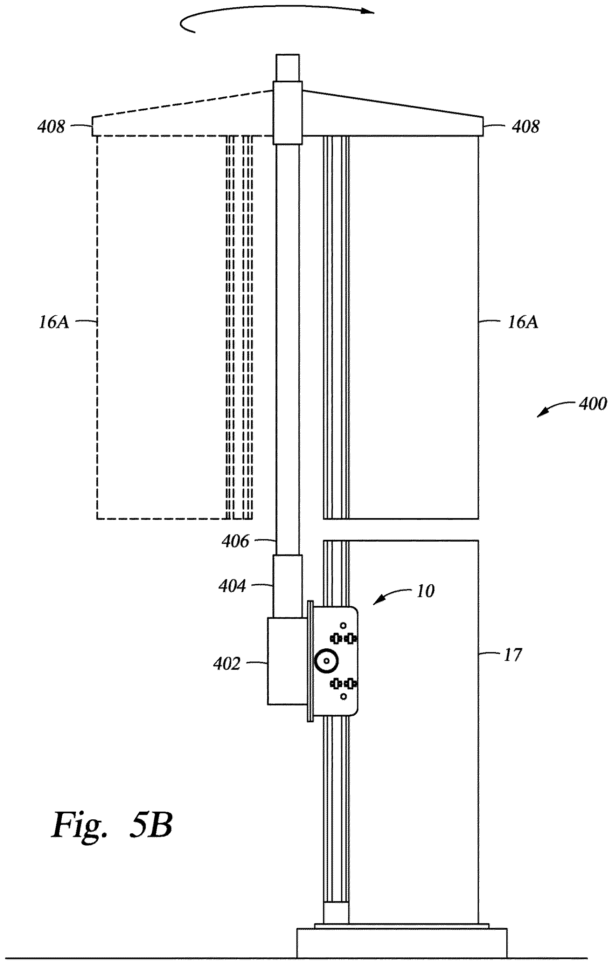

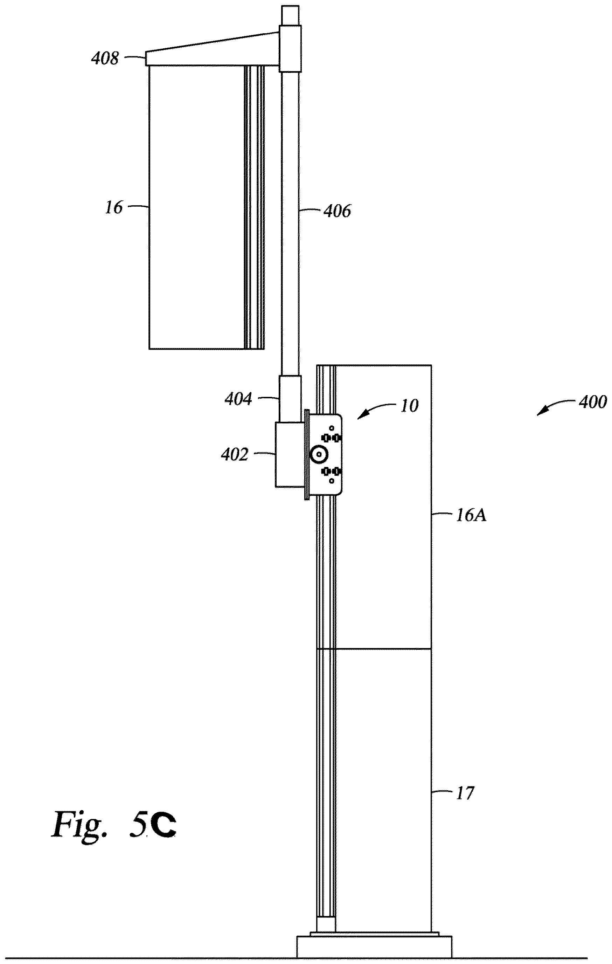

Figures 5A-5C illustrate another embodiment of assembling a wind turbine in accordance with the present disclosure, the wind turbine being assembled using a rotating pole assembly attached to the carrier. Figure 5A illustrates the rotating pole assembly in the loading position raising a tower body member that is attached thereto. Figure 5B illustrates the rotating pole assembly after having rotated from the loading position to the unloading position such that the tower body member is located above a tower base. Figure 5C illustrates the rotating pole assembly raising an additional tower body member in the loading position to a top of an existing turbine tower.

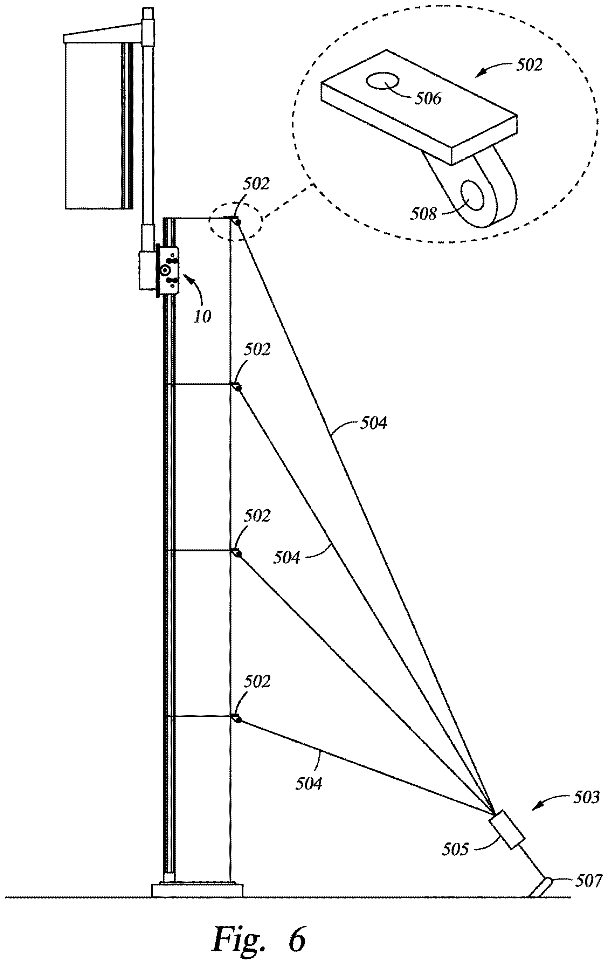

Figure 6 illustrates an additional support system that may be utilized for enhanced safety when assembling a wind turbine. The additional support system includes angles, steel cables, and an anchor system.

### DETAILED DESCRIPTION

The present disclosure relates to a wind turbine 1 and methods of assembling the wind turbine. After assembly, the wind turbine 1 comprises a turbine tower 2, a nacelle 6, and a hub 7. Blades 9 are attached to the hub 7, thereby forming a rotor. The nacelle 6 and the hub 7 are operatively connected to the turbine tower 2 via a carriage 10. The turbine tower 2 comprises a tower base 17 and tower body members 16. Depending upon the shape of the tower base 17 and the tower body members 16, the turbine tower may be semi-conical or semi-tubular and have a flat face. It is to be understood that the tower base 17 and the tower body members 16 are substantially identical to each other (e.g., having similar or identical material properties, shape, height, and/or weight). For example, the tower base 17 and each of the tower body members 16 can be constructed of steel and have a height of 20 feet. Alternatively, the tower base 17 and some (or all) of the tower body members 16 can differ from each other (e.g., having different material properties, shape, height, and/or weight). For example, the tower base 17 can be constructed of cement while some (or all) of the tower body members 16 are constructed of steel.

The tower base 17 includes a tower base guide rail 18a and a tower base rack 19a. The tower base rack 19a extends along the tower base guide rail 18a. Each of the tower body members includes a tower body guide rail 18b and a tower body rack 19b, with the tower body rack 19b extending along the tower body guide rail 18b. After the turbine tower 2 is formed (*i.e.*, after at least one tower body member 16 is connected to the tower base 17), the tower base guide rail 18a and the tower body guide rails 18b collectively form a rail track 18. It is to be understood that as a vertical height of the turbine tower 2 is increased by adding additional tower body members 16, a length of the rail track 18 will also increase because of the additional tower body guide rails 18b. After the turbine tower 2 is formed (*i.e*., after at least one tower body member 16 is connected to the tower base 17), the tower base rack 19a and the tower body racks 19b collectively form a rack 19. It is to be understood that as a vertical height of the turbine tower 2 is increased by adding additional tower body members 16, a length of the rack 19 will also increase because of the additional tower body racks 19b.

As illustrated in Figures 4A-4D, the carriage 10 may include a pinion 11, a bearing 12, and a body 14. The pinion 11 may be engageable with the rack 19 in a manner that facilities movement of the carriage 10 up the turbine tower 2. The bearing 12 may be attached to the body 14. Trolley wheels 25 may be disposed in and connected to the carriage body 14. The trolley wheels 25 may be part of a trolley that includes an actuator for selectively engaging the trolley wheels with the rail track 18. The bearing 12 may be adapted to either operatively connect the nacelle 6 to the carriage 10 or to operatively connect a crane platform 23 to the carriage. The bearing 12 may allow for rotation of the nacelle 6 relative to the body 14 subject to a rotary drive (not shown). The rotary drive may operated by a programmable logic controller (PLC, not shown) in order to point the nacelle 6 into the wind during operation of the wind turbine 1. The rotary drive may include an electric motor (not shown) connected to the carriage body 14 and rotationally connected to a pinion (not shown) which meshes with a gear (not shown) of the bearing 12. Operation of the rotary drive motor may rotate the nacelle 6 relative to the carriage body 14. The rotary drive may further include a lock (not shown) for selectively rotationally connecting the nacelle 6 relative to the carriage body 14. The lock may include a gear tooth (not shown) selectively engageable with the bearing gear via operation of a linear actuator (*e.g*., a solenoid) and a proximity or limit sensor to verify engagement of the tooth with the gear. Engagement of the gear with the tooth may rotationally connect the nacelle 6 to the carriage body 14. Verification of engagement by the proximity/limit sensor may also prevent operation of the rotary drive motor when the rotary drive is locked. Alternatively, the lock may include a disk (not shown) incorporated in the rotary drive motor and a retainer for retaining the disk.

Collectively, the rail track 18 and the trolley wheels 25 may constitute a guide system. The rail track 18, which includes the tower base guide rail 18a and the tower body guide rails 18*b*, may be connected to a flat face of the tower base 17 and the tower body members 16, respectively, such as by fastening or welding. It is to be understood that additional known methods could be used to connect the tower base guide rail 18a and the tower body guide rails 18b to the tower base 17 and the tower body members 16, respectively. When engaged with the rail track 18, the trolley wheels 25 may operatively connect the carriage body 14 to the rail track 18 in a manner that enables longitudinal movement (*e.g*., upward and/or downward movement) of the carriage 10 relative to the turbine tower 2 subject to operation of a drive system.

Collectively, the pinion 11, the rack 19, and an electric drive motor (not shown) may constitute the drive system that, upon operation, facilitates movement of the carriage 10 up and down the turbine tower 2. A rotor of the drive motor (not shown) may be rotationally connected to pinion 11 and a housing of the drive motor (not shown) may be connected to the carriage body 14. The pinion 11 may be supported by the carriage body 14 so that the pinion may rotate relative thereto. Operation of the drive motor may lift the carriage 10 longitudinally upward along the turbine tower 2. For lowering the carriage 10, the drive motor may be speed controllable to manage descent. Additionally, the drive system may further include a lock to selectively longitudinally support the carriage 10 from the turbine tower 2. Alternatively, the drive system may further include a brake (not shown) to control descent of the carriage 10.

Figure 2A illustrates a crane rope 3a of crawler crane 3 placing the tower base 17 in an upright position. As illustrated in Figure 2B, the tower base 17 may be positioned on a pad 4. The pad 4 may be formed for receiving the tower base 17. It is to be understood that the crawler crane 3 may be a rough terrain or all terrain crane and/or include other boom types, such as lattice or A-frame. Figure 2C illustrates the crawler crane 3 releasably connecting the crane platform 23 to the carriage 10. The crane platform 23 is a platform of a sufficient size to enable a crane to be located thereon. The crane that is positioned onto the crane platform 23 may be the crawler crane 3. Alternatively, a crane other than crawler crane 3 could be positioned onto the crane platform 23. As illustrated in Figure 2D, the crawler crane 3 may be positioned onto the crane platform 23 by attaching a ramp 24 to the crane platform. After attaching ramp 24 to the crane platform 23, the crawler crane 3 can be positioned onto the crane platform by driving the crawler crane up the ramp and onto the crane platform.

As illustrated in Figure 2E, the carriage 10 and the crane platform 23 may be raised by the drive system to a top of the tower base 17 along the tower base guide rail 18a. The crane rope 3a of crawler crane 3 is connected to a first tower body member 16a. The crawler crane 3 is counterbalanced in a manner that enables the crane to lift the first tower body member 16a without toppling over or otherwise falling from crane platform 23. As illustrated in Figure 2F, the first tower body member 16a is being connected to the tower base 17 by the crawler crane 3, thereby forming turbine tower 2. The first tower body member 16a is connected to the tower base 17 in a manner such that the tower base guide rail 18a and the tower body guide rail 18b are aligned and the tower base rail 19a and the tower body rack 19b are aligned, enabling the carriage 10 to move from the tower base 17 to the first tower body member 16a and vice versa. The first tower body member 16a may be connected to the tower base 17 using fasteners (not shown). Alternatively, the first tower body member 16a may be connected to the tower base 17 using any other attachment means known to a person of ordinary skill in the art. A similar process is then repeated to connect additional body members 16 to the turbine tower 2, thereby increasing a vertical height of the turbine tower. Every time an additional body member 16 is being prepared to be connected to the existing turbine tower 2, the crane platform 23 may be raised to a top of the existing turbine tower along the rail track 18 before attaching the additional body member. Alternatively, in some situations, the crane platform 23 may only be raised to a top of the existing turbine tower 2 along the rail track 18 after two or more additional body members 16 have been connected to the turbine tower. The additional tower body members 16 are connected to the first tower body member 16a and each other in a manner such that the tower base guide rail 18*b* and the tower body guide rails 18*b* are aligned and the tower base rack 19a and the tower body rack 19b are aligned, thereby enabling the carriage 10 to move between the tower base, the first tower member, and each of the additional tower body members. Each of the additional tower members 16 can be connected to each other or to the first tower body member 16*a* using fasteners (not shown) or any other attachment means known to a person of ordinary skill in the art.

Figure 2G illustrates the crane platform 23 may be raised to a top of the turbine tower 2 along the rail track 18 before the crane rope 3*a* of crawler crane 3 is connected to a top tower body member 16*b*. The top tower body member 16*b* may include a pivot system 20. Figure 2H illustrates the top tower body member 16*b* being connected to the existing turbine tower 2. The top tower body member 16*b* is connected to a top body member of the existing turbine tower 2 in a manner such that the tower body guide rail 18*b* of the top tower body member 16*b* aligns with the rail track 18 of the existing turbine tower and the tower body rack 19*b* aligns with the rack 19 of the existing turbine tower, thereby enabling the carriage to move between the existing turbine tower and the top tower body member. The top tower body member 16*b* may be connected to a top tower body member of the existing turbine tower 2 using fasteners (not shown) or any other attachment means known to a person of ordinary skill in the art.

It is to be understood that during assembly of the turbine tower 2, the crane rope 3a of the crawler crane 3 may connect to the tower base 17 or to any of the individual tower body members 16 in any manner recognized by a person of ordinary skill in the art. By assembling the turbine tower 2 using the method described in the previous paragraphs, crawler crane 3 only has to have the capability to lift a single member of the turbine tower 2 at a time (*e.g.* tower base 17 or tower body member 16). Moreover, crawler crane 3 does not need to lift nacelle 6 and hub 7 to a top of the turbine tower 2 after the turbine tower has been assembled. Consequently, the size and cost of the crane needed to assemble turbine tower 2 can be reduced.

After the top tower body member 16b is connected, the crane platform 23 and the crawler crane 3 located thereon may be lowered along the rail track 18 by the drive system of the carriage 10. Upon reaching a bottom of the tower base 17, the ramp 24 may be reattached to the crane platform 23, thereby enabling the crawler crane 3 to be removed from the crane platform. The ramp 24 may then be detached from the crane platform 23 and the crane platform 23 subsequently removed from the carriage 10. As illustrated in Figure 2I, the nacelle 6 and hub 7 may then be connected to the carriage 10, such as by a flanged connection on the bearing 12. The nacelle 6 and hub 7 may be connected to the carriage 10 in the vertical position by crawler crane 3. The hub 7 may point upward (shown) or downward (not shown) in the vertical position. The bearing 12 may connect the nacelle 6 to the carriage body 14 and allow for rotation of the nacelle 6 relative to the body subject to a rotary drive (not shown). The rotary drive may operated by a programmable logic controller PLC (not shown) in order to point the nacelle 6 into the wind during operation. The rotary drive may include an electric motor (not shown) connected to the carriage body and rotationally connected to a pinion (not shown) which meshes with a gear (not shown) of the bearing 12. Operation of the rotary drive motor may rotate the nacelle 6 relative to the carriage body 14. The rotary drive may further include a lock (not shown) for selectively rotationally connecting the nacelle relative to the carriage body. The lock may include a gear tooth (not shown) selectively engageable with the bearing gear via operation of a linear actuator (i.e., a solenoid) and a proximity or limit sensor to verify engagement of the tooth with the gear. Engagement of the gear with the tooth may rotationally connect the nacelle 6 to the carriage body 14. Verification of engagement by the proximity/limit sensor may also prevent operation of the rotary drive motor when the rotary drive is locked. Alternatively, the lock may include a disk (not shown) incorporated in the rotary drive motor and a retainer for retaining the disk.

Figure 2J illustrates blades 9 may be attached to hub 7 to thereby form the rotor 8. After the nacelle 6 and the hub 7 are connected to the carriage 10 and the rotor 8 formed, the drive system in combination with the guide system of the carriage may be used to raise the nacelle and rotor upwardly along the rail track 18. Figure 2K illustrates the nacelle 6 and hub 7 being raised by the carriage 10 along the rail track 18 at a location approximately half of the vertical height of turbine tower 2. Figure 2L illustrates the nacelle 6 and hub 7 beginning to pivot from the vertical position to a horizontal position via pivot system 20 of the top tower body member 16b. The pivot system 20 may include a horizontal guide track 27, a curved guide track 28, a horizontal rack 29, and a curved rack 30. The horizontal guide track 27 may be connected to rail track 18 via the curved guide track 28. The horizontal rack 29 may be connected to rack 19 via the curved rack 30. Upon reaching the curved guide track 28 and the curved rack 30, the electric drive motor (not shown) enables the carriage 10, which is currently in a vertical position, to move seamlessly from rack 19 to curved rack 30 along rail track 18 and curved guide track 28. The electric drive motor (not shown) may continue to propel the carriage 10 forward on the curved rack 30 along curved guide track 28 until carriage seamlessly moves to horizontal rack 29 along horizontal guide track 27. In this manner, the pivot system 20 may collectively pivot the carriage 10, the nacelle 6, and the hub 7 from the vertical position to the horizontal position. Figures 2M and 2N illustrate the nacelle 6 and rotor 8 in the horizontal position and the wind turbine 1 ready for operation.

An alternative pivot system may include a stop (not shown) having a proximity or limit sensor (not shown) in communication with the PLC disposed in the turbine tower 2. In response to detection of the carriage 10, the nacelle 6, and the rotor 8 at the top of the turbine tower 2, the PLC may lock the drive motor of the carriage and engage pivot fasteners (not shown) with corresponding holes (not shown) formed in the carriage body 14 and the rail track 18, respectively, thereby pivoting the carriage body 14 to the rail track 18. The pivot fasteners may each be engaged and retracted by a fastener actuator (not shown), such as a solenoid and spring. Each pivot actuator may include a proximity or limit sensor in communication with the PLC to verify engagement of the pivot fasteners with the carriage body holes. Once the PLC has verified engagement, the PLC may deactivate the driver motor and disengage the trolley wheels 25 from the rail track 18. The alternative pivot system may further include a linear actuator (not shown), such as an electric motor and lead screw, disposed in a top of the turbine tower 2. An end of the lead screw distal from the motor may have a clamp and a clamp actuator in communication with the PLC via flexible leads. The PLC may then operate the clamp actuator to engage a pivot rod or pin (not shown) connected to the carriage body 14, thereby also pivoting the linear actuator to the carriage body. Once connected, the linear actuator may be operated to contract the lead screw, thereby pivoting the carriage 10, the nacelle 6, and the rotor 8 from the vertical position to the horizontal position. As the carriage 10, the nacelle 6, and the rotor 8 is pivoted, a tipping point may be reached. The linear actuator may be speed controlled to manage pivoting of the head after the tipping point is reached. Alternatively, a damper (not shown) may also be employed to control pivoting after carriage 10, the nacelle 6, and the rotor 8 tip from the vertical position to the horizontal position. Once the carriage 10, the nacelle 6, and the rotor 8 has been pivoted to the horizontal position, the linear actuator may be locked. A power cable (not shown) may be connected from a power converter (not shown) located in the turbine tower 2 and connected to the utility grid and the generator (not shown) of the nacelle 6. The PLC may also be connected to various sensors and actuators of the nacelle 6 and the rotary drive of the carriage via a third power and data cable. Alternatively, the nacelle may have its own programmable logic controller and the PLC may be connected to the nacelle's programmable logic controller. Alternatively, one or more of the pivot system actuators may be omitted and the functions performed manually.

Should the nacelle 6, hub 7, and/or rotor 8 need to be serviced, the drive system of the carriage 10 may be employed in a reverse operation. The reverse operation of the drive system would enable the carriage 10, the nacelle 6, and the rotor 8 to be pivoted from the horizontal position to the vertical position via the pivot system 20. The drive system could then be used to lower the carriage 10, the nacelle 6, and the rotor 8 to a base of the turbine tower 2. The nacelle 6 and/or hub/rotor 7, 8 may then be serviced at the base of the turbine tower 2 or removed and delivered to a service facility. Additionally, if severe weather, such as a hurricane, is forecast, the nacelle 6, the hub 7, and/or rotor 8 could be lowered to the base of the turbine tower 2 using the carriage 10 to offer more protection to these components of the wind turbine 1.

Figures 3A-3D illustrate a method of assembling tower turbine 2 according to another embodiment of the present disclosure. Many of the elements associated with the embodiment illustrated in Figures 3A-3D are the same as the embodiment depicted in Figures 2A-2N and will not be repeated here. As illustrated in Figure 3A, the crawler crane 3 is used to position a telescoping stiff-leg crane 300 onto the crane platform 23. The telescoping stiff-leg crane 300 may be operated by a user from a ground surface, eliminating the need for the user to be located on the crane platform 23 as it is raised along turbine tower 2. As illustrated in Figures 3B-3D, the telescoping stiff-leg crane 300 may be used to assemble the turbine tower 2 in a manner similar to using the crawler crane 3 positioned on the crane platform 23.

Figures 5A-5C illustrate yet another method of assembling tower turbine 2 according to another embodiment of the present disclosure. Many of the elements associated with the embodiment illustrated in Figures 5A-5C are the same as the embodiment depicted in Figures 2A-2N and will not be repeated here. The method illustrated in Figures 5A-5C eliminates the use of a crane attached to carriage 10. Instead, a rotating pole assembly 400 attached to carriage 10 may be used to assemble the turbine tower 2. The rotating pole assembly 400 may include a platform 402, a drive motor 404, a pole 406, and a support beam 408. The support beam 408 is attached to a top of the pole 406. A bottom of pole 406 is connected to the drive motor 404 such that upon operation of the drive motor 404, the pole 406 and the support beam 408 attached thereto rotate. In this manner, the rotating pole assembly 400 may be rotated from a loading position to an unloading position. Although Figure 5B indicates the rotating pole assembly 400 is rotated from the loading position to the unloading position counter-clockwise, it is to be understood that the rotating pole assembly could be rotated clockwise The drive motor 404 may be attached to a platform 402, the platform being adapted to be connected to bearing 12 of the carriage 10.

A first tower body member 16a is stood upright on a ground surface and is attached to the support beam 408 using fasteners (not shown) while the rotating pole assembly 400 is in the loading position. It is to be understood that the first tower body member 16a may be connected to the support beam in other manners known to a person of ordinary skill in the art. The loading position is a position in which the support beam 408 is extending outwardly from the tower base 17 or the turbine tower 2, depending on the location of the carriage 10. When the rotating pole assembly 400 is in the loading position, a tower body member 16 can be connected to the support beam 408. As illustrated in Figure 5A, after the first tower body member 16a is attached to the support beam 408, carriage 10 moves upwardly along the rail track 18 and the rack 19 while the rotating pole assembly 400 is in the loading position. After the carriage is located at a top of the tower base 17, the rotating pole assembly 400 is rotated via the drive motor 404 from the loading position to the unloading position (as illustrated in Figure 5B). This results in the first tower body member 16a being positioned above the tower base 17. The first tower body member 16a may then be connected to the tower base 17 while the rotating pole assembly 400 is in the unloading position. The first tower body member 16a is connected to the tower base 17 in a manner such that the tower base guide rail 18a and the tower body guide rail 18*b* are aligned and the tower base rail 19*a* and the tower body rack 19*b* are aligned, enabling the carriage 10 to freely move from the tower base 17 to the first tower body member 16*a* and vice versa. The first tower body member 16*a* may be connected to the tower base 17 using fasteners (not shown). Alternatively, the first tower body member 16*a* may be connected to the tower base 17 using any other attachment means known to a person of ordinary skill in the art. After the first tower body member 16*a* is connected to the tower base 17, the first tower body is disconnected from the support beam 408 of the rotating pole assembly 400. The rotating pole assembly 400 may then be rotated from the unloading position to the loading position before the carriage 10 is lowered along the rail track and rack of the turbine tower 2. After the carriage 10 is lowered, an additional tower body member 16 stood upright on a ground surface can be attached to the support beam 408. The foregoing method may then be repeated to increase a vertical height of the turbine tower 2.

It is to be understood that the various components of the wind turbine 1 (*e.g*., the nacelle 6, the tower base 17, tower body members 16) may be delivered from a factory (not shown) to a windfarm site using a truck or trucks (not shown). Once the pad 4 has been formed at the windfarm site, either crawler crane 3 or an alternative crane may unload the various components of the wind turbine 1 from the truck(s) to a location near the pad 4 for assembly in a manner in accordance with the present disclosure. After the wind turbine 1 has been assembled, the wind turbine may then be connected to a utility grid (not shown). Should the wind turbine 1 need to be removed from the windfarm site, the wind turbine can also be disassembled. To disassemble the wind turbine, the nacelle 6 and the rotor 8 will be lowered to the base of the turbine tower 2 in a manner similar to that described above for servicing the components. The nacelle 6 will then be disconnected from the bearing 12 of the carriage 10 and the crane platform 23 would subsequently be connected. Crawler crane 3, telescoping stiff-leg crane 300, or the rotating pole assembly 400 can then be used to disassemble the turbine tower 2 in a method reverse of that described above such that tower boy members 16 can individually be disconnected and removed from the turbine tower 2 one at a time. After the turbine tower 2 is disassembled, the tower base 17 can be removed from pad 4.

As the turbine tower 2 is being assembled, an additional support system 500 may be utilized for enhanced safety. The additional support system 500 is illustrated in Figure 6. The additional support system 500 is shown in Figure 6 and includes angles 502, steel cables 504, and an anchor system 503. Each angle 502 has a first end with a through-hole 506 and a second end with a through-hole 508. Each angle 502 is adapted to have the first end attached to a single member of the turbine tower 2 (*e.g.,* tower base 17 or tower body member 16) using a fastener, and the second end attached to the anchor system 503 via steel cable 504. The fastener passes through the through-hole 506 in the first end of the angle 502 to attach the angle to the member of the turbine tower 2. The steel cable passes through the through-hole 508 in the second end of the angle 502 to attach the steel cable 504 to the angle. The steel cable 504 is then run from the angle 502 to the anchor system 503 located on a ground surface. The anchor system 503 may comprise a winch 505 and a deadman 507. The second end of the angle 502 is adapted to protrude outwardly from the member of the turbine tower 2 to which the angle is attached.

As the turbine tower 2 is being assembled, the additional support system 500 may be installed by placing one or more angles 502 between each of the tower body members 16 as they are connected to the existing turbine tower 2. For example, before an additional tower body member 16 is connected to the existing turbine tower 2, the first end of the angle 502 can be fastened to the top tower body member of the existing turbine tower 2. A steel cable 504 may subsequently be attached to the second end of the angle 502 and run to the anchor support system 503. The additional tower body member 16, which may contain a grooved region to accommodate angle 502, is then connected to the top tower body member of the existing turbine tower 2 in any manner set forth in the present disclosure. This same method of attaching an angle 502 to the top tower body member 16 of the existing turbine tower 2 may be used as each additional tower body member 16 is attached to the turbine tower. The angles 502 may be arranged to protrude outwardly from the turbine tower 2 on a side generally opposite the carriage 10. Because each of the cables attached to the second end of the angles are generally attached to the same deadman, the cables form a waterfall pattern. In this manner, the additional support system serves as a counterbalance to the weight placed upon the turbine tower 2 as a result of the carriage 10 and anything attached thereto (e.g., crane 3, crane platform 23, nacelle 6 and hub 7) moving upwardly or downwardly along the rail track 18 and rack 19. In other words, the cables of the additional support system will be in tension while the side of the turbine tower 2 to which the carriage 10 is attached will be in compression, with the tension forces and compression forces balancing each other to provide additional support to the turbine tower. It is also to be understood that the additional support system may also be used between the first tower body member and the tower base.

While the foregoing is directed to embodiments of the present disclosure, other and further embodiments of the disclosure may be devised without departing from the scope determined by the claims that follow.

## Claims

1. A method of assembling a wind turbine (1), comprising:
placing a tower base (17) having a round cross section in an upright position, the tower base including a tower base guide rail (18a) attached to an outer side wall of the tower base and a carriage (10), the carriage being movable along the tower base guide rail and including a crane (3) attached thereto; and
connecting a first tower body member (16a) having a similar or identical shape as the tower base to the tower base to form a turbine tower (2), the first tower body member including a first tower body guide rail (18b) attached to an outer side wall of the tower member and being connected to the tower base in a manner such that the tower base guide rail axially aligns with the first tower body guide rail to collectively form a rail track (18), the carriage being movable up and down the turbine tower along the rail track,
wherein the carriage is connected to the tower base in a vertical position and a top tower body member of the turbine tower comprises a pivot system (20) for pivoting the carriage from the vertical position to a horizontal position when the carriage arrives at the top of the turbine tower.

2. The method of claim 1, wherein a crane platform (23) is attached to the carriage, the crane being positioned on the crane platform, wherein the crane is in particular a stiff leg crane, and wherein the first tower body member is connected to the tower base using the crane.

3. The method of claim 2, wherein the method comprises raising the crane platform and the crane positioned thereon to a top of the tower base along the tower base guide rail and subsequently using the crane to connect the first tower body member to the tower base.

4. The method of any of the preceding claims, wherein the method comprises connecting additional tower body members to increase a vertical height of the tower turbine, each of the additional tower body members including a tower body guide rail, the additional tower body members being connected to each other and to the first tower body member in a manner such that the tower base guide rail, the first tower body guide rail, and each additional tower body guide rail axially align with each other to collectively form the rail track.

5. The method of claim 4, wherein the tower base, the first tower body member, and each of the additional tower body members are substantially identical to each other, and the method comprises connecting each of the additional tower body members using the crane, the method further comprising raising the crane platform and the crane located thereon to a top of the turbine tower along the rail track before using the crane to connect each of the additional tower body members.

6. The method of any of the preceding claims, wherein the pivot system comprises a horizontally extending guide track (27), the horizontally extending guide track being connected to the rail track in a manner that enables the carriage to be pivoted from the vertical position to the horizontal position when the carriage arrives at the top of the tower.

7. The method of any of the preceding claims, wherein the method comprises disconnecting the crane platform from the carriage and subsequently connecting a nacelle (6) and hub (7) to the carriage in a vertical position.

8. The method of claim 7, wherein the method comprises:
connecting blades (9) to the hub to form a rotor (8);
raising the carriage, nacelle, and rotor along the rail track to the top of the turbine tower; and
pivoting the carriage, nacelle, and rotor from the vertical position to the horizontal position via the pivot system.

9. A wind turbine (1) comprising:
a turbine tower (2) including a tower base (17) having a round cross section and a plurality of tower body members (16) having a similar or identical shape as the tower base, the tower base including a tower base guide rail (18a) attached to an outer side wall of the tower base, each of the plurality of tower body members including a tower body guide rail (18b) attached to an outer side wall of the tower member, the tower base and the plurality of tower body members being connected in a manner such that the tower base guide rail and the tower body guide rails collectively form a vertically extending rail track (18); and
a carriage (10) movable along the vertically extending rail track, the carriage including a bearing (12) that is adapted to releasably connect a crane platform (23) having a crane (3) positioned thereon to the turbine tower,
wherein the carriage is connected to the tower base in a vertical position and a top tower body member of the turbine tower comprises a pivot system (20) for pivoting the carriage from the vertical position to a horizontal position when the carriage arrives at the top of the turbine tower.

10. The wind turbine of claim 9, wherein the bearing is adapted to releasably connect a nacelle to the turbine tower when the bearing is not connected to a crane platform.

11. The wind turbine of claim 9 or 10, wherein each of the plurality of tower body members includes a rack (19), the rack of each tower body member extending along the tower body guide rail (18b) of that tower body member, and wherein the wind turbine comprises a drive system for moving the carriage up and down the turbine tower along the rail track, the drive system including a motor connected to the carriage and a pinion (11) connected to a rotor of the motor, the pinion being engageable with the racks of the tower body members.

12. A method of assembling a wind turbine (1), comprising:
placing a tower base (17) in an upright position, the tower base including a tower base guide rail (18a) and a carriage (10), the carriage including a rotating pole assembly (400) rotatable between a loading position and an unloading position;
connecting a first tower body member (16a) to the rotating pole assembly while the rotating pole assembly is in the loading position;
moving the carriage upwardly to a top of the tower base along the tower base guide rail while the rotating pole assembly is in the loading position; and
rotating the rotating pole assembly from the loading position to the unloading position such that the first tower body member is positioned above the tower base.

13. The method of claim 12, wherein the first tower body member is connected to the tower base to form a turbine tower (2) after rotating the rotating pole assembly from the loading position to the unloading position, the first tower body member being connected to the tower base in a manner such that the tower base guide rail axially aligns with the first tower body guide rail to collectively form a rail track (18), the carriage being movable up and down the turbine tower along the rail track.

14. The method of claim 12, wherein the first tower body member is disconnected from the rotating pole assembly after the first tower body member is connected to the tower base, and
wherein the method comprises in particular connecting additional tower body members to increase a vertical height of the tower turbine, each of the additional tower body members including a tower body guide rail (18a), the additional tower body members being connected to each other and to the first tower body member in a manner such that the tower base guide rail, the first tower body guide rail, and each additional tower body guide rail axially align with each other to collectively form the rail track,
wherein each of the additional tower body members are in particular individually connected to the turbine tower using the rotating pole assembly, each additional tower body member being individually connected to the rotating pole assembly while each additional tower body member is positioned in an upright manner on a ground surface and the rotating pole assembly is in the loading position, each additional tower body member being raised to a top of the turbine tower by the carriage moving upwardly along the rail track while the rotating pole assembly is in the loading positing, the rotating pole assembly positioning each additional tower body member above the turbine tower by rotating from the loading position to the unloading position.

## Patentansprüche

1. Verfahren zur Montage einer Windturbine (1), das Folgendes umfasst:
Platzieren einer Turmbasis (17), die einen runden Querschnitt aufweist, in einer aufrechten Position, wobei die Turmbasis eine Turmbasisführungsschiene (18a) umfasst, die an einer äußeren Seitenwand der Turmbasis befestigt ist, und einen Schlitten (10), wobei der Schlitten entlang der Turmbasisführungsschiene bewegbar ist und einen daran befestigten Kran (3) umfasst; und
Verbinden eines ersten Turmkörperelements (16a), das eine ähnliche oder identische Form wie die Turmbasis aufweist, an der Turmbasis zum Bilden eines Turbinenturms (2), wobei das erste Turmkörperelement eine erste Turmkörperführungsschiene (18b) umfasst, die an einer äußeren Seitenwand des Turmelements befestigt ist und mit der Turmbasis in einer Weise verbunden ist, dass die Turmbasisführungsschiene axial mit der ersten Turmkörperführungsschiene ausgerichtet ist, um zusammen eine Schienenbahn (18) zu bilden, wobei der Schlitten entlang der Schienenbahn am Turbinenturm nach oben und unten bewegbar ist,
wobei der Schlitten mit der Turmbasis in einer vertikalen Position verbunden ist und ein oberes Turmkörperelement des Turbinenturms ein Schwenksystem (20) zum Schwenken des Schlittens aus der vertikalen in eine horizontale Position, wenn der Schlitten an der Spitze des Turbinenturms ankommt, umfasst.

2. Verfahren nach Anspruch 1, wobei eine Kranplattform (23) am Schlitten befestigt ist, wobei der Kran auf der Kranplattform positioniert ist, wobei der Kran insbesondere ein Kran mit einem steifen Fuß ist und wobei das erste Turmkörperelement unter Verwendung des Krans an der Turmbasis befestigt wird.

3. Verfahren nach Anspruch 2, wobei das Verfahren Anheben der Kranplattform und des darauf positionierten Krans entlang der Turmbasisführungsschiene zu einer Spitze der Turmbasis und anschließendes Verwenden des Krans zum Verbinden des ersten Turmkörperelements mit der Turmbasis umfasst.

4. Verfahren nach einem der vorhergehenden Ansprüche, wobei das Verfahren Verbinden zusätzlicher Turmkörperelemente umfasst, um eine vertikale Höhe der Turmturbine zu erhöhen, wobei jedes der zusätzlichen Turmkörperelemente eine Turmkörperführungsschiene umfasst, wobei die zusätzlichen Turmkörperelemente miteinander und mit dem ersten Turmkörperelement in einer Weise verbunden sind, dass die Turmbasisführungsschiene und jede zusätzliche Turmkörperführungsschiene axial miteinander ausgerichtet sind, um die Schienenbahn zu bilden.

5. Verfahren nach Anspruch 4, wobei die Turmbasis, das erste Turmkörperelement und jedes der zusätzlichen Turmkörperelemente im Wesentlichen identisch zueinander sind, und wobei das Verfahren Verbinden jedes der zusätzlichen Turmkörperelemente unter Verwendung des Krans umfasst, wobei das Verfahren ferner Anheben der Kranplattform und des darauf befindlichen Krans entlang der Schienenbahn zu einer Spitze des Turbinenturms umfasst, bevor der Kran verwendet wird, um jedes der zusätzlichen Turmkörperelemente zu verbinden.

6. Verfahren nach einem der vorhergehenden Ansprüche, wobei das Schwenksystem eine sich horizontal erstreckende Führungsbahn (27) umfasst, wobei die sich horizontal erstreckende Führungsbahn mit der Schienenbahn in einer Weise verbunden ist, die es dem Schlitten ermöglicht, von der vertikalen Position in die horizontale Position geschwenkt zu werden, wenn der Schlitten an der Spitze der Turms ankommt.

7. Verfahren nach einem der vorhergehenden Ansprüche, wobei das Verfahren Trennen der Kranplattform vom Schlitten und anschließendes Verbinden einer Gondel (6) und einer Nabe (7) mit dem Schlitten in einer vertikalen Position umfasst.

8. Verfahren nach Anspruch 7, wobei das Verfahren Folgendes umfasst:
Verbinden von Blättern (9) mit der Nabe zum Bilden eines Rotors (8);
Anheben des Schlittens, der Gondel und des Rotors entlang der Schienenbahn zur Spitze des Turbinenturms; und
Schwenken des Schlittens, der Gondel und des Rotors von der vertikalen Position in die horizontale Position über das Schwenksystem.

9. Windturbine (1), die Folgendes umfasst:
einen Turbinenturm (2), umfassend eine Turmbasis (17), die einen runden Querschnitt aufweist, und mehrere Turmkörperelemente (16), die eine ähnliche oder identische Form wie die Turmbasis aufweisen, wobei die Turmbasis eine Turmbasisführungsschiene (18a) umfasst, die an einer äußeren Seitenwand der Turmbasis befestigt ist, wobei jedes der mehreren Turmkörperelemente eine Turmkörperführungsschiene (18b) umfasst, die an einer äußeren Seitenwand des Turmelements befestigt ist, wobei die Turmbasis und die mehreren Turmkörperelemente in einer Weise verbunden sind, dass die Turmbasisführungsschiene und die Turmkörperführungsschienen zusammen eine sich vertikal erstreckende Schienenbahn (18) bilden; und
einen Schlitten (10), bewegbar entlang der sich vertikal erstreckenden Schienenbahn, wobei der Schlitten ein Lager (12) umfasst, das dazu angepasst ist, eine Kranplattform (23) mit einem darauf positionierten Kran (3) lösbar mit dem Turbinenturm zu verbinden,
wobei der Schlitten mit der Turmbasis in einer vertikalen Position verbunden ist und ein oberes Turmkörperelement des Turbinenturms ein Schwenksystem (20) zum Schwenken des Schlittens aus der vertikalen in eine horizontale Position, wenn der Schlitten an der Spitze des Turbinenturms ankommt, umfasst.

10. Windturbine nach Anspruch 9, wobei das Lager dazu angepasst ist, eine Gondel lösbar mit dem Turbinenturm zu verbinden, wenn das Lager nicht mit einer Kranplattform verbunden ist.

11. Windturbine nach Anspruch 9 oder 10, wobei jedes der mehreren Turmkörperelemente eine Zahnstange (19) umfasst, wobei sich die Zahnstange jedes Turmkörperelements entlang der Turmkörperführungsschiene (18b) dieses Turmkörperelements erstreckt, und wobei die Windturbine ein Antriebssystem zum Bewegen des Schlittens entlang der Schienenbahn nach oben und unten umfasst, wobei das Antriebssystem einen Motor, der mit dem Schlitten verbunden ist, und ein Ritzel (11), das mit einem Rotor des Motors verbunden ist, umfasst, wobei das Ritzel mit den Zahnstangen der Turmkörperelemente in Eingriff gebracht werden kann.

12. Verfahren zur Montage einer Windturbine (1), das Folgendes umfasst:
Platzieren einer Turmbasis (17) in einer aufrechten Position, wobei die Turmbasis eine Turmbasisführungsschiene (18a) und einen Schlitten (10) umfasst, wobei der Schlitten eine rotierende Pfostenanordnung (400) umfasst, die zwischen einer Ladeposition und einer Entladeposition drehbar ist;
Verbinden eines ersten Turmkörperelements (16a) mit der rotierenden Pfostenanordnung, während die rotierende Pfostenanordnung in der Ladeposition ist;
Bewegen des Schlittens nach oben zu einer Spitze der Turmbasis entlang der Turmbasisführungsschiene, während die rotierende Pfostenanordnung in der Ladeposition ist; und
Drehen der rotierenden Pfostenanordnung aus der Ladeposition in die Entladeposition, sodass das erste Turmkörperelement über der Turmbasis positioniert ist.

13. Verfahren nach Anspruch 12, wobei das erste Turmkörperelement mit der Turmbasis verbunden ist, um nach dem Drehen der rotierenden Pfostenanordnung aus der Ladeposition in die Entladeposition einen Turbinenturm (2) zu bilden, wobei das erste Turmkörperelement mit der Turmbasis in einer Weise verbunden ist, dass die Turmbasisführungsschiene mit der ersten Turmkörperführungsschiene ausgerichtet ist, um zusammen eine Schienenbahn (18) zu bilden, wobei der Schlitten entlang der Schienenbahn nach oben und unten bewegbar ist.

14. Verfahren nach Anspruch 12, wobei das erste Turmkörperelement von der rotierenden Pfostenanordnung getrennt wird, nachdem das erste Turmkörperelement mit der Turmbasis verbunden wird, und
wobei das Verfahren insbesondere Verbinden zusätzlicher Turmkörperelemente umfasst, um eine vertikale Höhe der Turmturbine zu erhöhen, wobei jedes der zusätzlichen Turmkörperelemente eine Turmkörperführungsschiene (18a) umfasst, wobei die zusätzlichen Turmkörperelemente miteinander und mit dem ersten Turmkörperelement in einer Weise verbunden sind, dass die Turmbasisführungsschiene und jede zusätzliche Turmkörperführungsschiene axial miteinander ausgerichtet sind, um die Schienenbahn zu bilden.
wobei jedes der zusätzlichen Turmkörperelemente insbesondere unter Verwendung der rotierenden Pfostenanordnung einzeln mit dem Turbinenturm verbunden ist, wobei jedes zusätzliche Turmkörperelement einzeln mit der rotierenden Pfostenanordnung verbunden ist, während jedes zusätzliche Turmkörperelement in einer aufrechten Weise auf einer Bodenoberfläche positioniert ist und die rotierende Pfostenanordnung in der Ladeposition ist, wobei jedes zusätzliche Turmkörperelement durch den Schlitten, der sich entlang der Schienenbahn nach oben bewegt, zu einer Spitze des Turbinenturms angehoben wird, während die rotierende Pfostenanordnung in der Ladeposition ist, wobei die rotierende Pfostenanordnung jedes zusätzliche Turmkörperelement durch Drehen von der Ladeposition in die Entladeposition über dem Turbinenturm positioniert.

## Revendications

1. Procédé d'assemblage d'une éolienne (1), comprenant :
la mise en place d'une base de tour (17) ayant une section transversale ronde en position verticale, la base de tour comprenant un rail de guidage de base de tour (18a) fixé à une paroi latérale extérieure de la base de tour et un chariot (10), le chariot étant mobile le long du rail de guidage de base de tour et comprenant une grue (3) qui y est attachée ; et
la liaison d'un premier élément de corps de tour (16a) ayant une forme similaire ou identique à celle de la base de tour à la base de tour pour former une tour de turbine (2), le premier élément de corps de tour comprenant un premier rail de guidage de corps de tour (18b) fixé à une paroi latérale extérieure de l'élément de tour et étant relié à la base de tour de manière à ce que le rail de guidage de base de tour s'aligne axialement avec le premier rail de guidage de corps de tour pour former collectivement une voie ferrée (18), le chariot étant mobile vers le haut et vers le bas de la tour de turbine le long de la voie ferrée,
dans lequel le chariot est relié à la base de tour en position verticale et un élément supérieur de corps de tour de la tour de turbine comprend un système pivot (20) pour faire pivoter le chariot de la position verticale à une position horizontale lorsque le chariot arrive à la partie supérieure de la tour de turbine.

2. Procédé selon la revendication 1, dans lequel une plate-forme de grue (23) est fixée au chariot, la grue étant positionnée sur la plate-forme de grue, la grue étant en particulier une grue à jambes de force, et dans lequel le premier élément de corps de tour est relié à la base de tour à l'aide de la grue.

3. Procédé selon la revendication 2, le procédé consistant à élever la plate-forme de grue et la grue positionnée sur celle-ci jusqu'à la partie supérieure de la base de tour le long du rail de guidage de la base de tour, puis à utiliser la grue pour relier le premier élément de corps de tour à la base de tour.

4. Procédé selon l'une quelconque des revendications précédentes, le procédé consistant à relier des éléments de corps de tour supplémentaires pour augmenter une hauteur verticale de la turbine de tour, chacun des éléments de corps de tour supplémentaires comprenant un rail de guidage de corps de tour, les éléments de corps de tour supplémentaires étant reliés les uns aux autres et au premier élément de corps de tour de manière à ce que le rail de guidage de base de tour, le premier rail de guidage de corps de tour et chaque rail de guidage de corps de tour supplémentaire s'alignent axialement les uns avec les autres pour former collectivement la voie ferrée.

5. Procédé selon la revendication 4, dans lequel la base de tour, le premier élément de corps de tour et chacun des éléments de corps de tour supplémentaires sont sensiblement identiques les uns aux autres, et le procédé consiste à relier chacun des éléments de corps de tour supplémentaires à l'aide de la grue, le procédé consistant en outre à élever la plate-forme de grue et la grue située sur celle-ci jusqu'à la partie supérieure de la tour de turbine le long de la voie ferrée avant d'utiliser la grue pour relier chacun des éléments de corps de tour supplémentaires.

6. Procédé selon l'une quelconque des revendications précédentes, dans lequel le système pivot comprend un rail de guidage (27) s'étendant horizontalement, le rail de guidage s'étendant horizontalement étant relié à la voie ferrée de manière à permettre au chariot de pivoter de la position verticale à la position horizontale lorsque le chariot arrive à la partie supérieure de la tour.

7. Procédé selon l'une quelconque des revendications précédentes, dans lequel le procédé consiste à séparer la plate-forme de grue du chariot et à relier ensuite une nacelle (6) et un moyeu (7) au chariot en position verticale.

8. Procédé selon la revendication 7, le procédé comprenant :
la liaison des pales (9) au moyeu pour former un rotor (8) ;
l'élévation du chariot, de la nacelle et du rotor le long de la voie ferrée jusqu'à la partie supérieure de la tour de turbine; et
le pivotement du chariot, de la nacelle et du rotor de la position verticale à la position horizontale par l'intermédiaire du système pivot.

9. Éolienne (1) comprenant :
une tour de turbine (2) comprenant une base de tour (17) ayant une section transversale ronde et plusieurs éléments de corps de tour (16) ayant une forme similaire ou identique à celle de la base de tour, la base de tour comprenant un rail de guidage de base de tour (18a) fixé à une paroi latérale extérieure de la base de tour, chacun de la pluralité d'éléments de corps de tour comprenant un rail de guidage de corps de tour (18b) fixé à une paroi latérale extérieure de l'élément de tour, la base de tour et la pluralité d'éléments de corps de tour étant reliées de telle sorte que le rail de guidage de base de tour et les rails de guidage de corps de tour forment collectivement une voie ferrée s'étendant verticalement (18) ; et
un chariot (10) mobile le long de la voie ferrée s'étendant verticalement, le chariot comprenant un palier (12) conçu pour relier de manière amovible une plate-forme de grue (23) sur laquelle est positionnée une grue (3) à la tour de turbine,
dans laquelle le chariot est relié à la base de tour en position verticale et un élément supérieur de corps de tour de la tour de turbine comprend un système pivot (20) pour faire pivoter le chariot de la position verticale à une position horizontale lorsque le chariot arrive à la partie supérieure de la tour de turbine.

10. Éolienne selon la revendication 9, dans laquelle le palier est conçu pour relier de manière amovible une nacelle à la tour de turbine lorsque le palier n'est pas relié à une plate-forme de grue.

11. Éolienne selon la revendication 9 ou 10, dans laquelle chaque élément de corps de tour comprend une crémaillère (19), la crémaillère de chaque élément de corps de tour s'étendant le long du rail de guidage de corps de tour (18b) de cet élément de corps de tour, et l'éolienne comprenant un système d'entraînement pour déplacer le chariot vers le haut et vers le bas de la tour de turbine le long de la voie ferrée, le système d'entraînement comprenant un moteur relié au chariot et un pignon (11) relié à un rotor du moteur, le pignon pouvant être engagé avec les crémaillères des éléments de corps de tour.

12. Procédé d'assemblage d'une éolienne (1), comprenant :
la mise en place d'une base de tour (17) en position verticale, la base de tour comprenant un rail de guidage de base de tour (18a) et un chariot (10), le chariot comprenant un ensemble de poteaux rotatifs (400) pouvant tourner entre une position de chargement et une position de déchargement ;
la liaison d'un premier élément de corps de tour (16a) à l'ensemble de poteaux rotatifs alors que l'ensemble de poteaux rotatifs est en position de chargement ;
le déplacement du chariot vers le haut de la base de tour le long du rail de guidage de base de tour alors que l'ensemble de poteaux rotatifs est en position de chargement ; et
la rotation de l'ensemble de poteaux rotatifs de la position de chargement à la position de déchargement de manière à ce que le premier élément de corps de tour soit positionné au-dessus de la base de tour.

13. Procédé selon la revendication 12, dans lequel le premier élément de corps de tour est relié à la base de tour pour former une tour de turbine (2) après avoir fait tourner l'ensemble de poteaux rotatifs de la position de chargement à la position de déchargement, le premier élément de corps de la tour étant relié à la base de tour de manière à ce que le rail de guidage de base de tour s'aligne axialement avec le premier rail de guidage de corps de tour pour former collectivement une voie ferrée (18), le chariot étant mobile vers le haut et vers le bas de la tour de turbine le long de la voie ferrée.

14. Procédé selon la revendication 12, dans lequel le premier élément de corps de tour est séparé de l'ensemble de poteaux rotatifs après que le premier élément de corps de tour a été relié à la base de tour, et
le procédé consistant notamment à relier des éléments de corps de tour supplémentaires pour augmenter une hauteur verticale de la turbine de tour, chacun des éléments de corps de tour supplémentaires comprenant un rail de guidage de corps de tour (18a), les éléments de corps de tour supplémentaires étant reliés les uns aux autres et au premier élément de corps de tour de manière à ce que le rail de guidage de base de tour, le premier rail de guidage de corps de tour et chaque rail de guidage de corps de tour supplémentaire s'alignent axialement les uns avec les autres pour former collectivement la voie ferrée,
dans lequel chaque élément de corps de tour supplémentaire est en particulier relié individuellement à la tour de turbine à l'aide de l'ensemble de poteaux rotatifs, chaque élément de corps de tour supplémentaire étant relié individuellement à l'ensemble de poteaux rotatifs alors que chaque élément de corps de tour supplémentaire est positionné à la verticale sur une surface au sol et que l'ensemble de poteaux rotatifs est en position de chargement, chaque élément de corps de tour supplémentaire étant élevé à la partie supérieure de la tour de turbine par le chariot se déplaçant vers le haut le long de la voie ferrée alors que l'ensemble de poteaux rotatifs est en position de chargement, l'ensemble de poteaux rotatifs positionnant chaque élément de corps de tour supplémentaire au-dessus de la tour de turbine en tournant de la position de chargement à la position de déchargement.
